# EUROPÄISCHE PATENTANMELDUNG

(11) **EP 1 818 381 A1**
(43) Veröffentlichungstag der Anmeldung: **15.08.2007**
(21) Anmeldenummer: 07002375.9
(22) Anmeldetag: 03.02.2007
(51) Int. Cl.: C09J 201/10, B60J 10/02

(54) **Mittel zum Verbinden zweier Teile**

(30) Priorität: 11.02.2006 DE 102006006382
(71) Anmelder: RICHARD FRITZ GMBH + CO. KG, 74354 Besigheim (DE)
(72) Erfinder: Schön, Michael, 73655 Plüderhausen (DE)
(74) Vertreter: Kastner, Hermann

(57) **Zusammenfassung**

Verwendung
- von einem MS-Polymer oder einem silan-modifizierten Polyuretan (SMP) als Kleber für einen ersten Teil (Primärteil) aus TPV, TPO, EPDM, PP, TPE-S oder aus einem Blend aus TPE-S mit PP nach dem Auftragen und Ablüften eines Haftvermittlers, der aus einem Epoxydharz auf der Basis von Bisphenol A (2,2 Bis-(p-hydroxyphenyl)propan) und von Epichlorhydrin (1-Chlor-2,3-epoxypropan) in einem Lösungsmittel besteht, und
- von einem Epoxydharz auf der Basis von Bisphenol A (2,2 Bis-(p-hydroxyphenyl)propan) und von Epichlorhydrin (1-Chlor-2,3-epoxypropan) in einem Lösungsmittel als Haftvermittler für einen zweiten Teil (Sekundärteil) aus einem organischen polymeren Werkstoff auf Polyolefin-Basis.

## Beschreibung

Beim Verbinden zweier Teile, von denen der eine Teil (Primärteil) aus einem anorganischen Werkstoff oder aus einem organischen Werkstoff auf Polyolefinbasis besteht und von denen der andere Teil (Sekundärteil), aus einem organischen Kunststoff auf Polyolefinbasis besteht, musste man bisher bestimmte Vorgehensweisen einhalten, wenn die Verbindung stabil, insbesondere gegen Feuchtigkeit stabil sein sollte.

Bei einem Kunststoff aus TPE, insbesondere aus TPV, musste man die sogenannte Heißklebung anwenden, bei der die zu verbindenden Teile auf eine höhere Temperatur gebracht werden müssen und außerdem unter Druck zusammengefügt werden müssen. Das bringt die Gefahr mit sich, dass bei dem aus Kunststoff bestehenden Teil eine bleibende Formänderung auftritt. Das kann die miteinander verbundenen Teile teilweise oder vollständig unbrauchbar machen.

Bei einem Kunststoff aus PP muss man eine aufwändige Vorbehandlung der Teile mit physikalischen Verfahren durchführen, etwa eine Plasmabehandlung, eine Koronabehandlung oder eine Flämmbehandlung.

Außerdem muss bei beiden Verfahrensweisen im Verbindungsbereich der Teile unbedingt ein Haftvermittler aufgetragen werden.

Als Kleber wird im Allgemeinen ein Ein- oder Zweikomponentenkleber auf Polyurethanbasis verwendet. Untersuchungen haben gezeigt, dass damit zum Teil eine Verbindung der beiden Teile mit kohäsiver Trennstelle erreicht wird, das heißt, dass beim Auftreten einer ausreichend großen Trennkraft die Trennstelle innerhalb der Kleberschicht liegt. Manchmal wird damit aber auch nur eine Verbindung mit adhäsiver Trennstelle erreicht, das heißt, dass die Trennstelle in der Grenzfläche zwischen der Kleberschicht und dem daran anschließenden Teil liegt. Eine solche Verbindung hat den weiteren Nachteil, dass die Trennstelle leicht weiterreißt, wenn erst einmal ein Anriss entstanden ist.

Wenn man zur Vermeidung des Wärmeverzugs der Kunststoffteile eine sogenannte Kaltverklebung anwendet, erreicht man meist nur eine mäßige Haftung der Teile mit adhäsiver Trennstelle. Wenn bei der Kaltverklebung dennoch eine kohäsive Trennstelle erreicht wird, erweist die Verklebung sich nicht als feuchtestabil oder die Bruchlast des Klebers ist sehr gering.

Der Erfindung liegt die Aufgabe zugrunde, ein Mittel zum Verbinden eines Primärteils und eines Sekundärteils anzugeben, bei dem eine höhere Haftfestigkeit und eine bessere Beständigkeit der Verbindung erreicht wird. Diese Aufgabe wird durch ein Mittel nach Anspruch 1 gelöst.

Mit diesem Mittel kann auf eine Heißverklebung mit ihren Nachteilen verzichtet werden. Außerdem wird damit eine Verklebung der Teile mit einer kohäsiven Trennstelle erreicht, die überdies feuchtestabil ist.

Bei einer Ausgestaltung des Mittels nach Anspruch 2 werden besonders gute Ergebnisse bei der Verklebung erreicht. Das gleiche gilt bei einer Ausgestaltung des Mittels nach Anspruch 3 und/oder Anspruch 4.

Bei einer Ausgestaltung des Mittels nach Anspruch 5 ist der gerätetechnische Aufwand für das Auftragen des Klebers verhältnismäßig gering. Dafür muss eine längere Aushärtezeit abgewartet werden, die von der Schichtdicke des Klebers und vom Feuchtigkeitsgrad der umgebenden Luft abhängt.

Bei einer Ausgestaltung des Mittels nach Anspruch 6 ist der gerätetechnische Aufwand für das Auftragen des Klebers zwar etwas größer. Dafür ist aber die Aushärtezeit unabhängig von der Schichtdicke des Klebers und vom Feuchtigkeitsgrad der umgebenden Luft und insgesamt erheblich kürzer.

Im Folgenden werden einige Ausführungsbeispiele erläutert.

Das Mittel kann verwendet werden, um einen Rahmen aus TPE, EPDM oder PP mit einer Glasscheibe zu verbinden. Dabei wird der Rahmen in einem Warmformverfahren, insbesondere im Spritzgussverfahren in einer Spritzform, als einteiliges Bauteil hergestellt, das auf den Randbereich der Glasscheibe abgestimmt ist. Am Rahmen wird im Verbindungsbereich mit der Glasscheibe ein Haftvermittler aufgetragen. Nach dem Ablüften des Haftvermittlers wird entweder auf der mit dem Haftvermittler versehenen Verbindungsfläche des Rahmens oder auf der Verbindungsfläche der Glasscheibe das Mittel als Kleber aufgetragen. Der Rahmen und die Glasscheibe werden zusammengefügt und aneinander gedrückt.

Das Mittel kann auch verwendet werden, um einen Rahmen aus TPE, EPDM oder PP mit einer Scheibe aus kratzfest beschichtetem Polykarbonat zu verbinden. Die übrigen Maßnahmen sind die gleichen wie bei dem zuvor beschriebenen Ausführungsbeispiel.

Das Mittel kann auch verwendet werden, um eine Zierleiste aus Leichtmetall oder aus einem Schwermetall, wie zum Beispiel Chrom, mit einem Rahmen aus TPE, EPDM oder PP zu verbinden, der seinerseits mit einer Glasscheibe verbunden ist. Dabei wird im Verbindungsbereich mit der Zierleiste am Rahmen ein Haftvermittler aufgetragen.
Nach dem Ablüften des Haftvermittlers wird entweder auf der mit dem Haftvermittler versehenen Verbindungsfläche des Rahmens oder auf der Verbindungsfläche der Zierleiste das Mittel als Kleber aufgetragen. Die Zierleiste wird am Rahmen angelegt und die beiden Teile zusammengedrückt.

Das Mittel kann auch verwendet werden, um Zentrierstifte aus PP an einem Rahmen aus TPE, EPDM oder PP zu befestigen, der seinerseits mit einer Glasscheibe verbunden ist. Dabei wird an den Verbindungsflächen beider Teile, d.h. sowohl an den Zentrierstiften wie auch am Rahmen, ein Haftvermittler aufgetragen. Nach dem Ablüften des Haftvermittlers wird entweder auf der mit dem Haftvermittler versehenen Verbindungsfläche der Zentrierstifte oder auf denjenigen des Rahmens das Mittel als Kleber aufgetragen. Die Zentrierstifte werden am Rahmen positioniert und daran angedrückt.

Zum Verbinden zweier Teile, von denen der eine Teil (Primärteil) aus einem anorganischen Werkstoff, z.B. aus Glas, Glaskeramik, Leichtmetall, Schwermetall oder kratzfest beschichtetem Polycarbonat, oder aus einem organischen Werkstoff, z.B. aus TPV, TPO, EPDM, PP, TPE-S oder aus einem Blend aus TPE-S mit PP, besteht und von denen der andere Teil (Sekundärteil) aus einem organischen Werkstoff, z.B. aus TPV, TPO, EPDM, PP, TPE-S oder aus einem Blend aus TPE-S mit PP, besteht, wird bei demjenigen Teil, der aus einem organischen Werkstoff besteht, auf die Verbindungsfläche ein Haftvermittler aufgetragen, der aus einem Epoxydharz auf der Basis von Bisphenol A (2,2 Bis-(p-hydroxyphenyl)propan) und Epichlorhydrin (1-Chlor-2,3-epoxypropan) in einem Lösungsmittel besteht. Nach dem Ablüften des Haftvermittler wird auf die Verbindungsfläche eines der beiden Teile, das heißt des Primärteils oder des Sekundärteils, ein Kleber aufgetragen, der ein MS-Polymer oder ein silan-modifiziertes Polyuretan (SMP) ist. Anschließend werden die beiden Teile zusammengefügt und aneinander angedrückt.

## Patentansprüche

1. Mittel zum Verbinden zweier Teile, mit den Merkmalen:
- der eine Teil (Primärteil) besteht aus einem anorganischen oder aus einem organischen Werkstoff,
- der andere Teil (Sekundärteil) besteht aus einem organischen polymeren Werkstoff auf Polyolefin-Basis,
- zum Auftragen auf den Verbindungsbereich des Sekundärteils ist ein Haftvermittler vorhanden, der aus einem Epoxydharz auf der Basis von Bisphenol A (2,2 Bis-(p-hydroxyphenyl)propan) und Epichlorhydrin (1-Chlor-2,3-epoxypropan) in einem Lösungsmittel besteht und
- zum Auftragen auf den Verbindungsbereich des Primärteils oder auf den Verbindungsbereich des Sekundärteils mit abgelüftetem Haftvermittler ist ein Kleber vorhanden, der ein MS-Polymer oder ein silan-modifiziertes Polyuretan (SMP) ist.

2. Mittel nach Anspruch 1, mit dem Merkmal
- das Molekulargewicht des Haftvermittlers liegt zwischen 300 und 3000.

3. Mittel nach Anspruch 1 oder 2, mit dem Merkmal
- der Feststoffgehalt des Haftvermittlers liegt zwischen 1 % und 10 %.

4. Mittel nach einem der Ansprüche 1 bis 3, mit dem Merkmal:
- der Haftvermittler ist ein Primer, wie er von der Firma DOW Automotive unter dem Handelsnamen "BETAPRIME 5600-1" vertrieben wird.

5. Mittel nach Anspruch 1, mit dem Merkmal:
- der Kleber ist ein Einkomponentenkleber, der mittels Luftfeuchtigkeit aushärtet.

6. Mittel nach Anspruch 1, mit dem Merkmal:
- der Kleber ist ein Zweikomponentenkleber, dem vor dem Auftragen eine wasserabgebende Substanz als zweite Komponente beigemischt wird.

7. Verwendung des Mittels nach Anspruch 1 zum Verkleben
- eines Primärteil aus Glas, Glaskeramik, Leichtmetall, Schwermetall oder kratzfest beschichtetem Polycarbonat mit
- einem Sekundärteil aus TPV, TPO, EPDM, PP, TPE-S oder aus einem Blend aus TPE-S mit PP.

8. Verwendung des Mittels nach Anspruch 1 zum Verkleben
- eines Primärteil aus TPV, TPO, EPDM, PP, TPE-S oder aus einem Blend aus TPE-S mit PP nach dem Auftragen und Ablüften eines Haftvermittlers mit
- einem Sekundärteil aus TPV, TPO, EPDM, PP, TPE-S oder aus einem Blend aus TPE-S mit PP.

9. Verwendung
- von einem MS-Polymer oder einem silan-modifizierten Polyuretan (SMP) als Kleber für einen ersten Teil (Primärteil) aus Glas, Glaskeramik, Leichtmetall, Schwermetall oder kratzfest beschichtetem Polycarbonat und
- von einem Epoxydharz auf der Basis von Bisphenol A (2,2 Bis-(p-hydroxyphenyl)propan) und von Epichlorhydrin (1-Chlor-2,3-epoxypropan) in einem Lösungsmittel als Haftvermittler für einen zweiten Teil (Sekundärteil) aus einem organischen polymeren Werkstoff auf Polyolefin-Basis.
